(19) Europäisches Patentamt
European Patent Office
Office européen des brevets

(11) **EP 4 775 514 A1**

(12) **EUROPÄISCHE PATENTANMELDUNG**

(43) Veröffentlichungstag:
**15.07.2026 Patentblatt 2026/29**

(21) Anmeldenummer: 26150836.0

(22) Anmeldetag: **08.01.2026**

(51) Internationale Patentklassifikation (IPC):
**B65G 27/04** (2006.01)  **B65G 65/44** (2006.01)

(52) Gemeinsame Patentklassifikation (CPC):
**B65G 27/04; B65G 65/44;** B65G 2201/042

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **13.01.2025  DE 102025100874**

(71) Anmelder: **CiTEX Holding GmbH**
**49324 Melle (DE)**

(72) Erfinder:
• **Thiel, Marius**
**49088 Osnabrück (DE)**
• **Winking, David**
**49124 Georgsmarienhütte (DE)**
• **Stening, Markus**
**49328 Melle (DE)**

(74) Vertreter: **Bremer, Ulrich**
**Advopat**
**Patent- und Rechtsanwälte**
**Theaterstraße 6**
**30159 Hannover (DE)**

(54) **SCHWINGFÖRDERER UND VERFAHREN ZUM SCHWINGFÖRDERN VON SCHÜTTGUT**

(57)     Die Erfindung betrifft einen Schwingförderer (1) zum Transportieren von Schüttgut (2), wobei der Schwingförderer (1) aufweist:
- einen Fülltrichter (4) mit einem am unteren Ende des Fülltrichters ausgebildeten Trichterauslass (10),
- eine Förderrinne (3) und
- einen Schwingtreiber (6) zum Antreiben der Förderrinne (3) mit einer Schwingbreite (S) und einer Schwingfrequenz,
wobei zwischen dem Trichterauslass (10) und der Förderrinne (3) ein Ausgabespalt (12) mit einer Spalthöhe (d) ausgebildet ist.

Hierbei ist vorgesehen, dass der Trichter (4) einen Trichter-Körper (14) und einen am Trichter-Körper (14) vertikal verstellbaren Schieber (15) aufweist, wobei der Trichterauslass (10) am Schieber (15) ausgebildet ist und der Schieber (15) von einem unteren Anschlag aus gegenüber dem Trichter-Körper vertikal nach oben verstellbar ist unter Vergrößerung des Ausgabespaltes (12).

Fig. 1

EP 4 775 514 A1

**Beschreibung**

Die Erfindung betrifft einen Schwingförderer und ein Verfahren zum Schwingfördern von Schüttgut.

Schwingförderer dienen zur Förderung von Schüttgütern, d. h. rieselfähigen Gütern. Hierzu wird Schüttgut einem Fülltrichter von oben zugeführt und zwischengespeichert und nachfolgend von dem Fülltrichter nach unten auf eine Förderrinne ausgegeben. Die Förderrinne wird von einem Schwingtreiber periodisch angetrieben, wobei der Schwingtreiber die Förderrinne in Schwingungen mit definiert eingestellter Schwingfrequenz und Schwingbreite bzw. Wurfweite antreibt, so dass das Schüttgut stoßweise entlang der Förderrinne in einer Förderrichtung gefördert wird. Hierbei weist der Fülltrichter im Allgemeinen an seinem unteren Ende einen Trichterauslass auf, aus dem das rieselfähige Schüttgut auf die Förderrinne fällt und zunächst im Wesentlichen in dem Füllbereich zwischen dem Trichterauslass und der Förderrinne verbleibt. Hierbei verteilt sich das rieselfähige Schüttgut im Allgemeinen zunächst bei ruhendem Schwingtreiber nicht bzw. nur in geringem Umfang zur Seite hin. Durch die Schwingungen des Schwingtreibers wird das Schüttgut auf der Förderrinne nachfolgend in Förderrichtung geworfen, so dass das im Fülltrichter aufgenommene Schüttgut bzw. Vorratsmaterial selbsttätig nach unten aus dem Trichterauslass auf die Förderrinne nachrutscht.

Durch den Schwingförderer kann somit ein definierter Materialdurchsatz, d.h. dass pro Zeit über die Förderrinne transportierte Material, eingestellt und das Schüttgut für eine nachfolgende Verarbeitung transportiert werden, z.B. als Zuführgut zu einem Extruder oder zu einer Abfüllstation. Als Schüttgut können unterschiedliche Materialien transportiert werden, z. B. Kunststoff und Gummi, insbesondere als Partikel, Granulat, Pulver oder Flakes, weiterhin Stein, z.B. als Kies oder Sand, sowie auch Lebensmittel wie Mehl und Getreide. Weiterhin können auch z. B. Tabletten oder Dragees transportiert werden.

Der Materialdurchsatz kann zum einen durch die Schwingbreite des Schwingtreibers eingestellt werden, und weiterhin durch den Materialquerschnitt in der Förderrinne. Die Abhängigkeit des Materialdurchsatzes von Schwingbreite und Schwingfrequenz ist im Allgemeinen komplex, da als Schwingtreiberarme z. B. Blattfedern mit einer Eigenfrequenz eingesetzt werden, und das Verhältnis der vom Schwingtreiber angegebenen Anregungsfrequenz und der Eigenfrequenz des Schwingsystems relevant ist, sowie auch die Leistung, mit der das Schwingsystem angeregt wird. Eine Änderung der Schwingbreite wird im Allgemeinen durch eine Änderung der Frequenz bzw. Anregungsfrequenz und/oder der Leistung erreicht. Eine Einstellung der Schwingbreite ist jedoch nur begrenzt möglich. So wird bei sehr kleinen Schwingbreiten das Schüttgut im Allgemeinen nicht gleichmäßig in Bewegung versetzt, da es sich nicht von der Förderrinne abhebt und somit keine Wurfförderung erreicht wird. In diesem unteren Bereich neigt der Materialfluss zur Unterbrechung und einem nicht linearen Zusammenhang zwischen Amplitude und Materialfluss. In einem mittleren Bereich wird die angestrebte Wurfförderung erreicht, bei der sich das Material bzw. Schüttgut im Verlauf der Schwingung von der Förderrinne löst und von ihr auf eine gleichbleibende Geschwindigkeit in Abhängigkeit zu ihrer Auslenkung beschleunigt wird. In diesem mittleren Bereich kann somit eine gleichmäßige Förderung und ein nahezu linearer Zusammenhang zwischen Schwingamplitude und Materialdurchsatz erreicht werden. Bei einer weiteren Erhöhung der Schwingamplitude wird ein oberer Bereich erreicht, in dem die Wurfförderung ungleichmäßig und ineffizient wird, da es zu keinem regelmäßigen Kontakt zwischen dem Schüttgut und der Förderrinne mehr kommt.

Somit wird im Allgemeinen der mittlere Bereich der Schwingbreite angestrebt und zur genaueren Einstellung der weitere Parameter der Spalthöhe verwendet, um den Materialdurchsatz zu regeln. Hierbei zeigt sich, dass die einstellbare Spalthöhe wiederum begrenzt ist, wobei eine maximale Spalthöhe durch die Höhe der Rinnengeometrie begrenzt ist, und eine minimale Spalthöhe durch mögliche Materialverklemmungen begrenzt wird. Bei einer Materialverklemmung werden mehrere Partikel des Schüttguts miteinander derartig verklemmt, dass sie den Ausgabespalt zwischen dem Fülltrichter und der Förderrinne verstopfen. Daher wird im Allgemeinen die Spalthöhe in Abhängigkeit der Korngröße des Schüttgutes eingestellt. Auch derartige allgemeine Abschätzungen sind jedoch ungenau, da sich auch Anhäufungen von Partikeln mit größerer Gesamthöhe bilden können, falls z. B. Partikel ungünstig aneinander liegen, und zu einer Verklemmung und somit einem Blockieren des Ausgabespaltes führen können, der den Materialfluss unterbricht. Der Schwingantrieb und das nach unten und in Förderrichtung drückende Füllgut bilden somit derartige Materialverklemmungen, die im Allgemeinen nicht mehr gelöst werden; durch den Schwingtreiber wird das Material vielmehr gegen den Trichterauslass gedrückt und weiter eingeklemmt.

Die Einstellung des Ausgabespaltes und somit der Spalthöhe erfolgt über eine Höhenverstellung, mit der der gesamte Fülltrichter gegenüber der Förderrinne verstellt wird. Bei Auftreten einer Materialverklemmung kann somit grundsätzlich die Höhenverstellung betätigt oder die Materialverklemmung von einem Benutzer durch ein zusätzliches Werkzeug gelöst werden; hierbei ist jedoch immer eine Überwachung und aktive Änderung erforderlich, auch treten Verzögerungen und größere Schwankungen im Materialdurchsatz auf.

Somit werden im Allgemeinen Schwingförderer für unterschiedliche Materialarten vorgesehen, um je nach Materialart bzw. Korngröße geeignete Verstellbereiche für die Höhenverstellung und Einstellung des Ausgabespaltes zu erreichen.

AT 524 882 A1 zeigt eine Auftragevorrichtung für Schüttgutbehälter, die eine Aufgabeöffnung und ein Abgabeöffnung für Schüttgut aufweisen, zur Abgabe von Schüttgut von der Abgabeöffnung auf ein Fördermittel zum Austragen des vom Schüttgutbehälter auf das Fördermittel abgegebenen Schüttguts.

DE 901 516 B beschreibt ein Förderrohr oder eine Förderrinne mit Schwingantrieb und den Einströmquerschnitt für das Fördergut begrenzenden Abstreifer, wobei hinter dem Abstreifer zur Beruhigung des Förderstroms der Förderquerschnitt auf eine bestimmte Förderstrecke verkleinert ist.

DE106 317 A zeigt Vorrichtung zum Zuführen von Fördergut auf ein Förderband, bei der Schüttguttrichter das Gut einer Schüttelrinne verstellbarer Neigung aufgibt, in deren oberen Teil eine Reihe schwenkbarer Klappen hineinhängen, die durch größere Schüttgutklumpen aufgestoßen werden.

DE 10 2021 005 028 A1 beschreibt eine Dosiereinrichtung mit wenigstens einem Dosierbehälter, der mit wenigstens einer Auslassöffnung versehen ist, die durch einen Schieber verschließbar ist, der mit einem Schieberantrieb verbunden ist.

Der Erfindung liegt somit die Aufgabe zugrunde, einen Schwingförderer und ein Verfahren zum Schwingfördern von Schüttgut zu schaffen, mit denen mit geringem Aufwand eine sichere Schwingförderung und gute Einstellbarkeit des Materialdurchsatzes ermöglicht wird.

Diese Aufgabe wird durch einen Schwingförderer und ein Verfahren nach den unabhängigen Ansprüchen gelöst. Die Unteransprüche beschreiben bevorzugte Weiterbildungen.

Somit weist der Fülltrichter einen Trichter-Körper und einen am Trichter-Körper vertikal verstellbaren Schieber auf, wobei der Trichterauslass, aus dem das Füllgut über einen Ausgabespalt auf die Förderrinne ausgegeben wird, am Schieber ausgebildet ist.

Hierbei wird der Schieber insbesondere nicht aktiv nach oben verstellt, sondern wird insbesondere durch eine Gesamtkraft nach unten gegen einen Anschlag, insbesondere einen Anschlag am Trichter-Körper gedrückt. Die Gesamtkraft enthält die Gewichtskraft des Schiebers; sie kann insbesondere durch die Gewichtskraft selbst gebildet sein, so dass der Schieber durch seine Gewichtskraft nach unten gegen den Anschlag gedrückt wird, oder auch durch die Gewichtskraft und eine zusätzlich nach unten wirkende Federkraft.

Die Verstellbarkeit des Schiebers unterscheidet sich somit von der Höhenverstellung des gesamten Fülltrichters gegenüber der Förderrinne zur Einstellung des Ausgabespaltes;

- bei der herkömmlichen Höhenverstellung des gesamten Fülltrichters gegenüber der Förderrinne werden der Trichter-Körper und der Schieber zusammen verstellt, um die Spalthöhe des ordnungsgemäßen Materialdurchsatzes einzustellen;
- die erfindungsgemäße vertikale Verstellung des Schiebers am Trichter-Körper erfolgt hingegen vorteilhafterweise passiv durch Einwirkung einer nach oben gerichteten Kraft des Füllguts auf den unteren Rand des Schiebers, d.h. den Trichterauslass. Diese nach oben wirkende Kraft wird durch eine Materialverklemmung im Ausgabespalt hervorgerufen.

Durch diese relativ einfache Maßnahme kann auf überraschende Weise eine deutliche Verbesserung des Förderbetriebs erreicht werden und insbesondere eine Materialverklemmung auch bei geringen Spalthöhen vermieden werden:
Erfindungsgemäß wird erkannt, dass bei einer Materialverklemmung eine feste Materialansammlung kraftschlüssig zwischen der Förderrinne und dem Trichterauslass gebildet wird, die bei Betrieb, d. h. Vibration der Förderrinne, von unten gegen die Auslassöffnung und somit den Trichter drückt. Indem der Trichterauslass an einem vertikal verstellbaren Schieber angebracht ist, wird bei Auftreten einer derartigen Materialverklemmung der Schieber direkt vertikal nach oben verstellt, d. h. gegen seine Gewichtskraft, so dass der Schieber sich bei Auftreten einer Materialverklemmung selbsttätig nach oben öffnet und somit den Ausgabespalt und die Spalthöhe vergrößert.

Hierbei wird erfindungsgemäß erkannt, dass das Problem der Materialverklemmung herkömmlicherweise entsteht, indem die Anhäufung der Partikel des Füllgutes durch den Schwingantrieb von unten eine Kraft auf den Trichterauslass ausübt und der Trichterauslass in Reaktion hierauf eine Gegenkraft nach unten ausübt. Durch diese Gegenkraft wird der Kraftschluss von dem Trichterauslass über die Partikel mit der Förderrinne möglich. Um diesen Einfluss zu reduzieren, wird erfindungsgemäß die Gegenkraft reduziert, die der Schieber ausüben kann. Hierzu wird die herkömmliche feste Positionierung des unteren Trichterauslasses aufgelöst und dem Schieber die Möglichkeit gegeben, gegen die Kraft nach oben nachzugeben. Somit wird insbesondere die maximale Gegenkraft, die er ausüben kann, limitiert auf eine nach unten einwirkende Gesamtkraft.

Es zeigt sich, dass als nach unten einwirkende Gesamtkraft grundsätzlich die senkrecht auf ihn einwirkende, eigene Gewichtskraft ausreichend ist; ergänzend kann eine nach unten wirkende Federkraft, insbesondere wegabhängige Federkraft, eingesetzt werden.

Hierbei ist die Gesamtkraft, die von dem Schieber nach unten ausgeübt wird, hinreichend, so dass er beim regulären Betrieb und Materialtransport nicht durch das beförderte Schüttgut nach oben verstellt wird, bzw. in relevantem Umfang verstellt wird. Wenn als Schüttgut in der Förderrinne als vollfluidisiertes Material angesetzt wird, so bildet das Schüttgut einen statischen Auftrieb auf den Schieber aus, der jedoch im Allgemeinen gering ist. Es zeigt sich erfindungsgemäß, dass das transportierte fluidisierte Schüttgut keinen relevanten Auftrieb ausübt und durch die einwirkende Gesamtkraft, d. h. insbesondere Gewichtskraft, des Schiebers bereits eine sichere Verstellung zurück in die untere Position möglich ist.

Somit wird durch die Gesamtkraft auch eine Rückstellung des Schiebers nach einer Materialverklemmung sichergestellt; die Materialverklemmung drückt den Schieber nach oben, bis der Kraftschluss hierdurch nachlässt und sich somit die Materialverklemmung auflöst, so dass der Schieber wieder durch die Gesamtkraft nach unten gegen seinen Anschlag fällt. Somit wird insbesondere auch verhindert, dass der Spalt nicht durch nachfließendes Material immer weiter aufgedrückt wird oder offenbleibt.

Somit kann der grundsätzlich nachteilhafte, bei Materialverklemmung auftretende Kraftschluss zwischen Förderrinne und dem nunmehr am Schieber ausgebildeten unteren Trichterauslass erfindungsgemäß ausgenutzt werden, um durch die Verstellung des Schiebers die Spalthöhe kurzzeitig zu öffnen, woraufhin bei normalem Materialfluss keine hinreichende, vertikal nach oben einwirkende Kraft mehr auftritt und der Schieber somit nach unten in seine Grundstellung fallen kann.

Die untere Position bzw. Grundstellung wird durch einen Anschlag festgelegt, der Anschlag vorzugsweise an dem Trichter-Körper bzw. relativ zu dem Trichter-Körper vorgesehen ist.

Die Förderrinne ist nicht auf rechteckige Rinnengeometrie festgelegt, es können auch weitere Rinnengeometrien mit z. B. V-Form oder rundem Querschnitt vorgesehen sein. Auch ist der Schieber nicht auf den genauen Querschnitt der Förderrinne festgelegt, sondern kann auch teilweise von dieser abweichen und somit auch bei einem eingestellten minimalen Ausgabespalt Teile der Rinne mit Material beschicken. Somit können Kanäle vorgesehen werden, in denen Material beim eingestellten Minimalspalt transportiert wird, was zu einem gleichmäßigeren Förderverhalten führt.

Erfindungsgemäß unterscheidet sich der verstellbare Schieber insbesondere auch von z. B. lediglich flexiblen Ausbildungen wie einem Gummilappen oder anderen nachgiebigen unteren Enden. Ein derartiges flexibles unteres Ende wie ein Gummilappen kann keine genaue Spalthöhe festlegen, da er bereits durch das in Förderrichtung drückende Schüttgut, d.h. auch ohne Materialverklemmung, nachgibt, wodurch die genaue Einstellung des Materialdurchsatzes verhindert wird.

Erfindungsgemäß wird insbesondere durch einen in Förderrichtung einwirkenden Druck des Materials keine Verstellung ausgeübt, d. h. - anders als bei Gummilappen und anderen flexiblen Begrenzungen -durch den Materialstrom wird keine Verstellung bewirkt, und erst der Kraftschluss zwischen Förderrinne und dem am Schieber vorgesehenen Trichterauslass führt durch den Schwingantrieb zu der vertikalen Kraft, die den Schieber nach oben verstellt.

Indem die Form des Schiebers, der auch den unteren Trichterauslass bildet, grundsätzlich dem Querschnitt der Förderrinne entspricht, wird ein gleichmäßiger, sich über die Breite ausbildender Ausgabespalt ausgebildet. Vorzugsweise kann die Form des Schiebers etwas von dem Querschnitt der Förderrinne abweichen, insbesondere kann der Schieber gegenüber dem Querschnitt der Förderrinne eine Aussparung aufweisen, so dass zwischen dem Schieber und der Förderrinne, insbesondere am unteren Bodenbereich der Förderrinne, ein freier Kanal gebildet wird, der der Aussparung entspricht. Somit wird selbst in einer untersten Position des Schiebers vorzugsweise der freie Kanal ausgebildet; erfindungsgemäß wird erkannt, dass dieser kleine freie Kanal nicht relevant ist, da im Ruhezustand keine relevanten Mengen des Schüttgutes hindurchtreten, der freie Kanal jedoch einen deutlich vergleichmäßigten Materialfluss ausbildet.

Die Erfindung wird im Folgenden anhand der beiliegenden Zeichnungen an einigen Ausführungsformen näher erläutert. Es zeigen:

Fig. 1    einen Schwingförderer gemäß einer Ausführungsform;

Fig. 2    Ausführungsformen von Rinnen und Schiebern mit unterschiedlichen Geometrien;

Fig. 3    Ausführungsformen des Schiebers und seiner Aufhängung mit und ohne Federunterstützung;

Fig. 4    eine Darstellung der Rinne mit Schieber und Ausgabespalt;

Fig. 5    eine Materialverklemmung im Ausgabespalt.

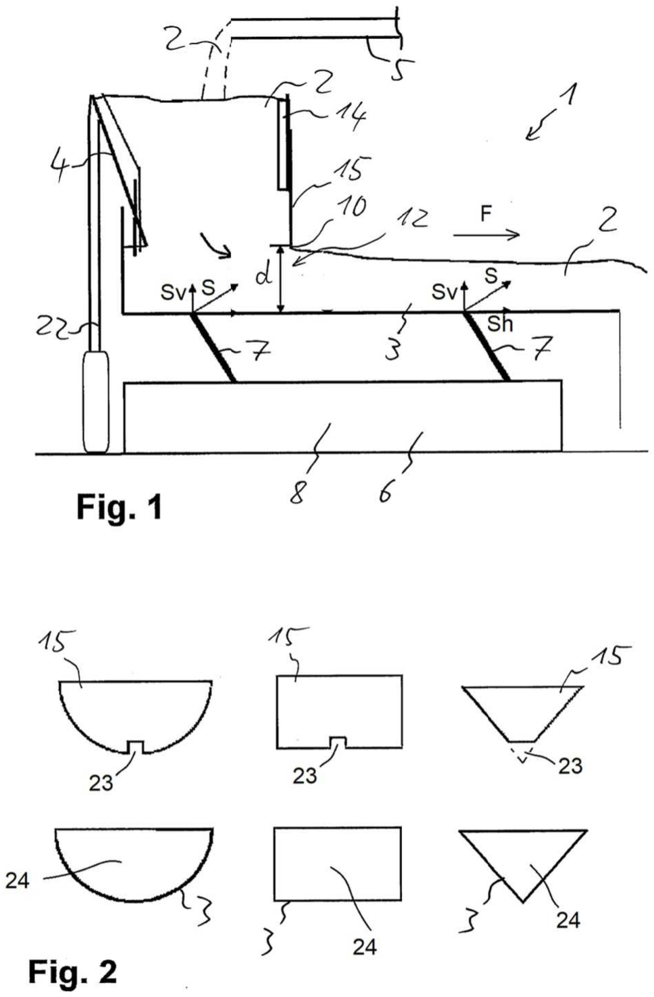

Ein Schwingförderer 1 zum Fördern von Schüttgut 2 weist eine Förderrinne (Rüttelrinne) 3 und einen Fülltrichter 4 auf, dem von einer Materialzuführung 5 das Schüttgut 2 zugeführt wird. Die Förderrinne 3 wird durch einen Schwingtreiber 6 mit Schwingtreiberarmen 7, z. B. Blattfedern, zum Transport des Schüttgutes angetrieben. Die Schwingtreiberarme 7 sind an einer Schwingtreiberbasis 8 aufgenommen bzw. angelenkt und werden von einem Schwingmechanismus der Schwingtreiberbasis 8 angetrieben, d. h. in einem Anregungswinkel mit einer Anregungsfrequenz geschwenkt. Der Antrieb des Schwingmechanismus bzw. der Schwingtreiberarme 7 kann "direkt" mit der Basis verbunden sein, weiterhin können der Schwingantrieb und die Förderrinne 3 z.B. auch an separaten Schwingtreiberarmen 7 am gleichen Basispunkt befestigt sein. Somit wird die Förderrinne 3 mit einer Schwingbreite S, die gegebenenfalls in Figur 1 etwas groß bzw. verdeutlicht eingezeichnet ist, periodisch hin- und herverstellt. Das aufgenommene Schüttgut 2 erfährt somit Stöße durch die Förderrinne 3, durch die es in Förderrichtung F gefördert wird. In Figur 1 ist die Schwingbreite S mit einer Aufteilung in den vertikalen Anteil $S_v$ und horizontalen Anteil $S_h$ dargestellt, die somit als Vektorsumme die Schwingbreite S bilden.

Der Fülltrichter 4 weist als unteren Rand einen unteren Trichterauslass 10 auf, so dass zwischen dem unteren Trichterauslass 10 und der Förderrinne 3 bzw. dem unteren Boden der Förderrinne 3 ein Ausgabespalt 12 mit der Spalthöhe d festgelegt ist. Das Schüttgut 2 ist grundsätzlich fließfähig und wird somit durch die angetriebene Förderrinne 3 fortlaufend in Förderrichtung F wegtransportiert, so dass Schüttgut 2 aus dem Fülltrichter 4 fortlaufend nachrutscht.

Die Fördermenge wird festgelegt durch den Querschnitt des Ausgabespaltes 12, der somit den Materialquerschnitt in der Förderrinne 3 festlegt, sowie die Schwingbreite S. Somit kann die Fördermenge grundsätzlich durch Einstellung der Spalthöhe d sowie der Schwingbreite S eingestellt werden. Die Abhängigkeit der Fördermenge, d. h. insbesondere des geförderten Schüttguts pro Zeit, von der Schwingbreite S ist im Allgemeinen komplexer, da in dieser Anhängigkeit das Verhältnis der Anregungsfrequenz und der Eigenfrequenz, insbesondere der als Blattfedern ausgebildeten Schwingtreiberarme 7, und die vom Schwingtreiber 6 ausgeübte Leistung abhängt.

Der Materialquerschnitt in der Förderrinne 3 ist im Allgemeinen durch die Geometrie der Förderrinne 3 und die Spalthöhe d festgelegt, die somit eine Querschnittsfläche definiert, die die mögliche Gesamtbeladung des Schwingförderers 1 limitiert.

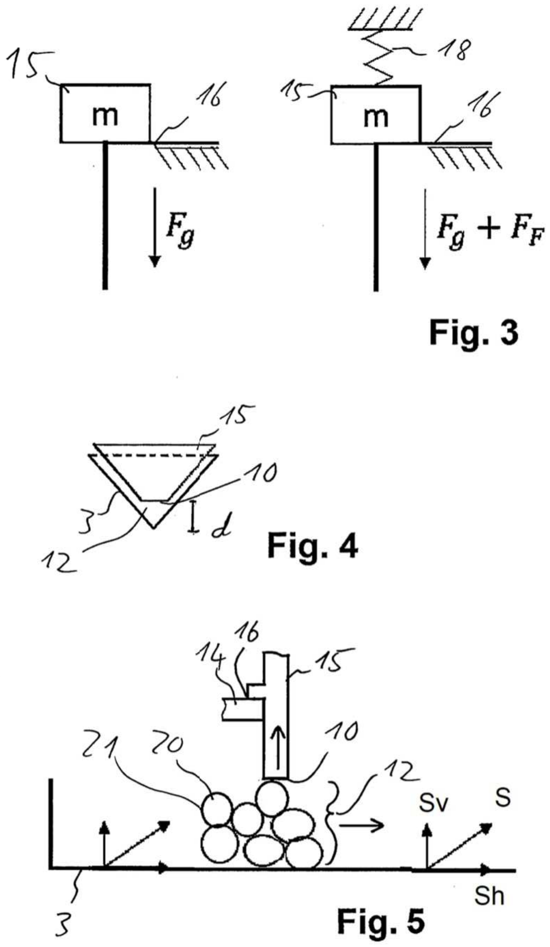

Der Fülltrichter 4 weist einen Trichter-Körper 14 und einen an dem Trichter-Körper 14 vorgesehenen Schieber 15 auf, an dessen unterem Ende der Trichterauslass 10 bzw. das Trichterende ausgebildet ist. Der Schieber 15 ist höhenverstellbar am Trichter-Körper 14 aufgenommen, z. B. als am Trichter-Körper 14 aufgenommenes Rohr. Gemäß der Ausführungsform der Figur 1 ist der Schieber 15 nicht federvorgespannt, so dass er alleine durch die Gravitationskraft nach unten gezogen wird. Hierbei ist ein Anschlag 16 vorgesehen, wie in der schematischen Darstellung der Figur 3 verdeutlicht, so dass der Schieber 15 frei nach oben verstellt werden kann und nachfolgend durch die Gravitationskraft wiederum nach unten gegen den Anschlag 16 fallen kann. In der unteren bzw. untersten Position des Schiebers 15 wird somit die Spalthöhe d festgelegt; durch Anheben des Schiebers 15 wird entsprechend die Spalthöhe bzw. der Auslassspalt 12 temporär vergrößert.

Wie in Figur 3 rechts dargestellt, kann der Schieber 15 ergänzend durch eine Feder 18, die zwischen dem Schieber 15 und z. B. dem Trichter-Körper 14 vorgesehen ist, nach unten vorgespannt werden, so dass eine Gesamtkraft F auf dem Schieber 15 nach unten wirkt, die als Summe der Gewichtskraft Fg und der Federkraft Ff ausgebildet wird.

Bei Betrieb des Schwingförderers 1 wird somit die Förderrinne 3 periodisch bzw. zyklisch mit der Schwingbreite S angetrieben, so dass das auf der Förderrinne 3 aufgenommene Schüttgut 2 entsprechende Würfe bzw. Stöße in Förderrichtung F und nach oben erfährt, die zum Transport des Schüttguts 2 in der Förderrichtung F führen. Hierbei kann in der Förderrinne 3 unterhalb des Materialauslasses bzw. Trichterauslasses 10 grundsätzlich ein Materialstau entstehen, wenn, wie in Figur 5 angedeutet, die Spalthöhe d derartig klein ist, dass mehrere Partikel 20 so aneinanderhaften oder sich verkeilen, dass sie zwischen dem Trichterauslass 10 und der Förderrinne 3 festgeklemmt werden. Somit wird eine Materialverklemmung 21 ausgebildet, bei der eine Anhäufung von Partikeln 20 kraftschlüssig sowohl an der Förderrinne 3 als auch am Trichterauslass 10 anliegt. Die Partikel 20 der Materialverklemmung 21 werden somit gegen den Trichterauslass 10 gedrückt, der bei einem starren Trichterauslass 10 dieser Belastung standhält. Da jedoch erfindungsgemäß der untere Trichterauslass 10 durch den Schieber 15 festgelegt ist, gibt in einer derartigen Situation der Materialverklemmung 21 der Schieber 15 vertikal nach oben nach, so dass die Spalthöhe d vergrößert wird und eine temporäre vergrößerte Spalthöhe dt ausgebildet wird, wodurch der Schüttgutstrom entsprechend kurzzeitig vergrößert wird. Da jedoch das Schüttgut 2 bei Auflösen der Materialverklemmung 21 keine direkte Gegenkraft auf den unteren Trichterauslass 10 des Schiebers 15 mehr ausübt, wird der Trichter 15 wiederum durch seine Gewichtskraft Fg, gemäß der weiteren Ausführungsform der Figur 3 entsprechend durch die Gesamtkraft F wiederum nach unten gedrückt. Die Gesamtkraft F ist hierbei derartig bemessen, dass der Schieber 15 unproblematisch nach unten bis zum Anschlag 16 gleitet und hierdurch den Materialstrom wieder verringert.

Somit wird lediglich temporär der Materialfluss etwas erhöht, es stellt sich wiederum ein Schüttgutstrom entsprechend der eingestellten Parameter der Spalthöhe d und der Schwingbreite S ein.

Die Spalthöhe d wird grundsätzlich durch eine Höhenverstellvorrichtung 22 eingestellt werden, bei der somit der Trichter-Körper 14 mitsamt Anschlag 16 und dem aufgenommenen Schieber 15 in der Höhe verstellt wird. Diese Einstellung erfolgt grundsätzlich vor dem Förderbetrieb und wird bei Materialverklemmungen nicht geändert.

Gemäß einer weiteren Ausführungsform kann auch eine aktive Verstellung des Schiebers 15 vorgesehen sein, die ergänzend zu der selbsttätigen Verstellung bei Materialverklemmung 21 vorgesehen ist. Bei der soeben beschriebenen Ausführungsform ist somit keine aktive Verstellung des Schiebers 15 vorgesehen.

Die Spalthöhe d, d.h. der durch den Schieber 15 bei Anlage am Anschlag 16 eingestellte Abstand zur Förderrinne 3, kann erfindungsgemäß somit durch die Höhenverstellvorrichtung 22 sehr gering eingestellt werden, z.B. bis auf einen minimalen Spaltwert von $d_{min}$ von 1,1 bis 2 oder 1.4 bis 2 der vertikalen Schwingbreiten-Komponente $S_h$, d.h. ein Verhältnis von $V = d_{min}/S_v$ im Bereich von 1,1 bis 2 oder 1,4 bis 2, ohne dass es zu Verklemmungen kommt, so dass sehr feine Dosierungen des Materialdurchsatzes MD bzw. ein sehr großer Bereich des einstellbaren Materialdurchsatzes erreicht wird.

Wie in Figur 2 gezeigt, ist die Geometrie des Schiebers 15 grundsätzlich an die Geometrie der Förderrinne 3 angepasst, so dass ein entsprechender Ausgabespalt 12 mit definiertem Querschnitt bzw. Spaltquerschnitt ausgebildet wird, insbesondere ein Ausgabespalt 12, der sich über die Breite der Förderrinne erstreckt; bei der Ausbildung der Förderrinne 3 mit halbkreisförmigem Querschnitt 24 weist der Schieber 15 somit vorzugsweise ebenfalls eine Halbkreisform auf, so dass ein gleichmäßiger, bogenförmiger Ausgabespalt 12 ausgebildet wird. Bei der mittleren Ausführungsform mit rechteckigem Querschnitt 24 weist der Schieber 15 entsprechend eine Rechteckform auf, so dass ein rechteckiger Ausgabespalt am Boden gebildet wird.

Wie aus Fig. 2 weiterhin ersichtlich ist, kann die Form des Schiebers 15 von dem Querschnitt der Förderrinne 3 etwas abweichen. Insbesondere kann der Schieber 15 gegenüber dem Querschnitt der Förderrinne eine Aussparung aufweisen, so dass zwischen dem Schieber 15 und der Förderrinne 3, insbesondere am unteren Bodenbereich der Förderrinne 3, ein freier Kanal 23 gebildet wird, der der Aussparung entspricht. Somit wird vorzugsweise im regulären Betrieb selbst in einer untersten Höhenposition des Fülltrichters 4 der freie Kanal 23 ausgebildet; erfindungsgemäß wird erkannt, dass dieser kleine freie Kanal 23 nicht relevant ist, da im Ruhezustand keine relevanten Mengen des Schüttgutes 2 hindurchtreten, der freie Kanal jedoch einen deutlich vergleichmäßigten Materialfluss ausbildet. Bei dem runden Querschnitt und rechteckigem Querschnitt kann der freie Kanal 23 als mittlere rechteckige Aussparung vorgesehen sein; bei der rechten Ausbildung mit Dreiecksform bzw. V-Form des Querschnitts 24 kann der freie Kanal 23 als Abstumpfung des unteren Endes ausgebildet sein.

Bezugszeichenliste

1 Schwingförderer
2 Schüttgut
3 Förderrinne (Rüttelrinne)
4 Fülltrichter
5 Materialzuführung
6 Schwingtreiber
7 Schwingtreiberarme, Blattfedern
8 Schwingtreiberbasis
10 Trichterauslass, unterer Trichterauslass
12 Ausgabespalt zwischen dem Trichterauslass 10 und der Förderrinne 3
14 Trichter-Körper des Fülltrichters 4
15 Schieber
16 Anschlag zur Festlegung des Ausgabespaltes 12
18 Feder
20 Partikel
21 Materialverklemmung
22 Höhenverstellvorrichtung
23 freier Kanal
24 Querschnitt der Förderrinne 3
d Spalthöhe
F Förderrichtung
S Schwingbreite
Sh vertikale Komponente der Schwingbreite

MD Materialdurchsatz

**Patentansprüche**

1. Schwingförderer (1) zum Transportieren von Schüttgut (2),

wobei der Schwingförderer (1) aufweist:

- einen Fülltrichter (4) mit einem am unteren Ende des Fülltrichters ausgebildeten Trichterauslass (10),
- eine Förderrinne (3) und
- einen Schwingtreiber (6) zum Antreiben der Förderrinne (3) mit einer Schwingbreite (S) und einer Schwingfrequenz (f),

wobei zwischen dem Trichterauslass (10) und der Förderrinne (3) ein Ausgabespalt (12) mit einer Spalthöhe (d) ausgebildet ist, **dadurch gekennzeichnet, dass** der Trichter (4) einen Trichter-Körper (14) und einen am Trichter-Körper (14) vertikal verstellbaren Schieber (15) aufweist, wobei der Trichterauslass (10) am Schieber (15) ausgebildet ist, wobei der Schieber (15) von einem unteren Anschlag (16) aus gegenüber dem Trichter-Körper (14) vertikal nach oben verstellbar ist unter Vergrößerung des Ausgabespaltes (12).

2. Schwingförderer (1) nach Anspruch 1, **dadurch gekennzeichnet, dass** er eine Höhenverstellvorrichtung (22) zur Höhenverstellung des Fülltrichters (4) gegenüber der Förderrinne (3) aufweist, wobei der Ausgabespalt (12) und die Spalthöhe (d) durch die Höhenverstellvorrichtung (22) verstellbar sind.

3. Schwingförderer (1) nach einem der vorherigen Ansprüche, **dadurch gekennzeichnet, dass** bei Betrieb des Schwingtreibers (S) bei einem Materialstau des Schüttgutes (2) der Schieber (15) durch das Schüttgut (2) vertikal nach oben verstellbar ist.

4. Schwingförderer (1) nach einem der vorherigen Ansprüche, **dadurch gekennzeichnet, dass** auf den Schieber (15) eine Gesamtkraft (F) nach unten einwirkt, die gebildet ist durch:

- die Gewichtskraft (Fg) des Schiebers (15), oder
- durch die Summe der Gewichtskraft des Schiebers (15) und eine Federkraft (FF), insbesondere eine Federkraft (FF) einer zwischen dem Trichter-Körper (14) und dem Schieber (15) vorgesehenen Feder (18).

5. Schwingförderer (1) nach einem der vorherigen Ansprüche, **dadurch gekennzeichnet, dass** oberhalb des Fülltrichters (4) eine Materialzuführung (5) vorgesehen ist zum Zuführen des Schüttguts (2) in den Fülltrichter (4).

6. Schwingförderer (1) nach einem der vorherigen Ansprüche, **dadurch gekennzeichnet, dass** der Schieber (15) außen an dem Trichter-Körper (14) verstellbar angebracht ist.

7. Schwingförderer (1) nach einem der vorherigen Ansprüche,

   **dadurch gekennzeichnet, dass** durch die Höhenverstellvorrichtung (22) eine Spalthöhe (d) bis zu einem minimalen Wert einer minimalen Spalthöhe dmin einstellbar ist,
   wobei die minimale Spalthöhe dmin zu einer vertikalen Komponente (Sv) der Schwingbreite (S) in einem Verhältnis V steht von $V = dmin/Sv >$ als 1,
   insbesondere $V >= 1,1$, z.B. $V >= 1,4$, z.B. $V >= 2$.

8. Schwingförderer (1) nach einem der vorherigen Ansprüche, **dadurch gekennzeichnet, dass** der Schieber (15) einen anderen Querschnitt als die Förderrinne aufweist.

9. Schwingförderer (1) nach Anspruch 8, **dadurch gekennzeichnet, dass** sich der Querschnitt des Schiebers (15) von dem Querschnitt der Förderrinne (3) durch einen freien Kanal (23) in der Förderrinne (3) unterscheidet, z.B. an einem unteren Punkt der Förderrinne, wobei der freie Kanal (23) auch bei einer durch die Höhenverstellvorrichtung (22) eingestellten minimalen Spalthöhe (dmin) freigelegt ist.

10. Verfahren zur Schwingförderung von Schüttgut (2) mit einem Schwingförderer (1) nach einem der vorherigen Ansprüche, wobei das Schüttgut (2) von oben in den Fülltrichter (4) eingegeben wird, an dem Trichterauslass (10) nach unten auf die Förderrinne (3) gelangt, und auf der Förderrinne (3) in einer Förderrichtung (F) mit einem Materialdurchsatz (MD) transportiert wird.

11. Verfahren nach Anspruch 10, **dadurch gekennzeichnet, dass** bei Betrieb des Schwingtreibers (S) bei einem Materialstau (21) des Schüttgutes (2) der Schieber (15) durch das Schüttgut (2) vertikal nach oben verstellt wird unter Vergrößerung des Ausgabespaltes (12).

12. Verfahren nach Anspruch 10 oder 11, **dadurch gekennzeichnet, dass** bei einem ungestauten Transport des Schüttgutes (2) auf der Förderrinne der Schieber (15) durch den Schwingtreiber (6) und das Schüttgut (2) nicht verstellt wird und auf dem Anschlag (16) verbleibt.

13. Verfahren nach einem der Ansprüche 10 bis 12, **dadurch gekennzeichnet, dass** bei einem ungestauten Transport des Schüttgutes (2) auf der Förderrinne ein auf den Schieber (15) einwirkender Auftrieb des fluidisierten Schüttguts (2) geringer ist als eine auf den Schieber (15) nach unten wirkende Gesamtkraft (F).

14. Verfahren nach einem der Ansprüche 10 bis 13, **dadurch gekennzeichnet, dass** der Materialdurchsatz (MD) des Schüttguts (2) durch die Förderrinne (4) von der Schwingfrequenz (f), der Schwingbreite (S) und der Spalthöhe (d) abhängt,

15. Verfahren nach einem der Ansprüche 10 bis 14, **dadurch gekennzeichnet, dass** als Schüttgut (2) eines oder mehrere der folgenden Materialien transportiert wird:
   Kunststoff, Gummi, Kies, Stein, Sand, Lebensmittel, Dragees, Pulver.

16. Verfahren nach einem der Ansprüche 10 bis 15, **dadurch gekennzeichnet, dass** durch die Höhenverstellvorrichtung (22) eine Spalthöhe (d) bis zu einem minimalen Wert einer minimalen Spalthöhe dmin einstellbar ist, die zu einer vertikalen Komponente (Sv) der Schwingbreite (S) in einem Verhältnis V steht von

$$V = dmin/Sv > als\ 1,$$

insbesondere $V >= 1,1$, z.B. $V >= 1,4$, z.B. $V >= 2$.

**Fig. 1**

**Fig. 2**

EP 4 775 514 A1

**Fig. 3**

**Fig. 4**

**Fig. 5**

Europäisches
Patentamt

European
Patent Office

Office européen
des brevets

# EUROPÄISCHER RECHERCHENBERICHT

Nummer der Anmeldung

EP 26 15 0836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H01 118921 U (-) 11. August 1989 (1989-08-11) * Seite 1 - Seite 9; Abbildungen 1-2 * ----- | 1,3-6,8, 10-15 | INV. B65G27/04 B65G65/44 |
| X | US 2 907 498 A (DER LELY CORNELIS VAN ET AL) 6. Oktober 1959 (1959-10-06) * Spalte 4, Zeile 48 - Spalte 6, Zeile 52; Abbildungen 5-8 * ----- | 1,3-6,8, 10-15 | |
| X | US 6 631 799 B2 (MOORE PUSH PIN CO [US]) 14. Oktober 2003 (2003-10-14) * Spalte 2, Zeile 60 - Spalte 11, Zeile 5; Abbildungen 1-11 * ----- | 1-8,10, 14,16 | |
| X | US 7 210 598 B2 (MICROFIL LLC [US]) 1. Mai 2007 (2007-05-01) * das ganze Dokument * ----- | 1-3, 6-10, 13-16 | |

**RECHERCHIERTE SACHGEBIETE (IPC)**

B65G
B65D

Der vorliegende Recherchenbericht wurde für alle Patentansprüche erstellt

| Recherchenort | Abschlußdatum der Recherche | Prüfer |
|---|---|---|
| Den Haag | 21. Mai 2026 | Scheller, Johannes |

EPO FORM 1503 03.82 (P04C03)

**EP 4 775 514 A1**

**ANHANG ZUM EUROPÄISCHEN RECHERCHENBERICHT
ÜBER DIE EUROPÄISCHE PATENTANMELDUNG NR.**

EP 26 15 0836

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2026

| Im Recherchenbericht angeführtes Patentdokument | Datum der Veröffentlichung | Mitglied(er) der Patentfamilie | Datum der Veröffentlichung |
|---|---|---|---|
| JP H01118921 U | 11-08-1989 | KEINE | |
| US 2907498 A | 06-10-1959 | KEINE | |
| US 6631799 B2 | 14-10-2003 | KEINE | |
| US 7210598 B2 | 01-05-2007 | CA 2428801 A1<br>US 2003222091 A1 | 30-11-2003<br>04-12-2003 |

Für nähere Einzelheiten zu diesem Anhang : siehe Amtsblatt des Europäischen Patentamts, Nr.12/82

EPO FORM P0461

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 524882 A1
- DE 901516 B
- DE 106317 A
- DE 102021005028 A1